(19) Europäisches Patentamt
European Patent Office
Office européen des brevets

(11) **EP 0 994 907 B1**

(12) **FASCICULE DE BREVET EUROPEEN**

(45) Date de publication et mention de la délivrance du brevet:
**20.03.2002 Bulletin 2002/12**

(21) Numéro de dépôt: **98935095.4**

(22) Date de dépôt: **03.07.1998**

(51) Int Cl.[7]: **C08F 222/10**, G02B 1/04

(86) Numéro de dépôt international:
**PCT/FR98/01429**

(87) Numéro de publication internationale:
**WO 99/02575 (21.01.1999 Gazette 1999/03)**

(54) **NOUVELLES COMPOSITIONS POLYMERISABLES ET LENTILLES OPTIQUES A HAUT INDICE DE REFRACTION OBTENUES A PARTIR DE CES COMPOSITIONS**

NEUE POLYMERISIERBARE ZUSAMMENSETZUNGEN UND KONTAKTLINSE MIT HOHEN BRECHUNGSINDEX HERGESTELLT AUS DIESEN ZUSAMMENSETZUNGEN

NOVEL POLYMERISABLE COMPOSITIONS AND OPTICAL LENSES WITH HIGH REFRACTIVE INDEX OBTAINED FROM SAID COMPOSITIONS

(84) Etats contractants désignés:
**DE FR GB IT**

(30) Priorité: **11.07.1997 FR 9708903**

(43) Date de publication de la demande:
**26.04.2000 Bulletin 2000/17**

(73) Titulaire: **ESSILOR INTERNATIONAL COMPAGNIE GENERALE D'OPTIQUE**
**94227 Charenton cédex (FR)**

(72) Inventeurs:
- **JIANG, Peiqi**
  **Kawasaki Kanagawa (JP)**
- **MENDUNI, Gilbert**
  **Shibuya-ku Tokyo (JP)**
- **WIDAWSKI, Gilles**
  **F-75011 Paris (FR)**

(74) Mandataire: **Catherine, Alain et al**
**Cabinet Harlé & Phélip**
**7, rue de Madrid**
**75008 Paris (FR)**

(56) Documents cités:
**EP-A- 0 394 495**
**WO-A-96/26184**
**WO-A-96/38486**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention a pour objet de nouvelles compositions polymères pour la fabrication de lentilles optiques à haut indice de réfraction et les lentilles optiques, en particulier ophtalmiques, obtenues à partir de ces compositions.

Par lentille optique à haut indice de réfraction, on entend une lentille optique dont l'indice de réfraction est supérieur ou égal à 1,55 et préférentiellement supérieur à 1,57.

De préférence, les nouvelles compositions polymérisables selon l'invention sont utiles dans la fabrication des verres de lunettes.

Une lentille ophtalmique à haut indice de réfraction doit posséder l'ensemble de caractéristiques suivantes :

- une transparence élevée (transmission généralement supérieure à 85%, et de préférence supérieure ou égale à 90%), avec une absence ou éventuellement une très faible diffusion de la lumière.
- Un nombre d'Abbe élevé, supérieur ou égal à 30, et de préférence supérieur ou égal à 35, afin d'éviter des aberrations chromatiques.
- Un faible indice de jaune et une absence de jaunissement au cours du temps.
- Une bonne résistance aux chocs (en particulier selon les normes CEN et FDA).
- Une bonne aptitude aux traitements divers (dépôt de revêtements durs, antireflets, primaires antichocs ...), et en particulier une bonne aptitude à la coloration.
- Une valeur de température de transition vitreuse de préférence supérieure ou égale à 80°C, et mieux encore supérieure à 90°C, de préférence comprise entre 90 et 110°C.

En outre, les compositions polymérisables doivent être également faciles à mettre en oeuvre sur le plan industriel.

En particulier, il est souhaitable que les compositions puissent être photopolymérisées, ce type de polymérisation très rapide permettant en effet de réduire les temps de cycle de fabrication des lentilles.

Un autre point à prendre en considération est le nombre et la nature des monomères utilisés dans la composition pour l'obtention du verre organique.

Ces monomères doivent être facilement accessibles sur le marché, en quantités importantes, à bas coûts et de qualité constante.

Sur ce dernier point, les monomères fabriqués en quantité industrielle présentent des caractéristiques sensiblement différentes selon les paramètres industriels de la fabrication, ce qui peut, dans une certaine mesure, influencer les propriétés du polymère final et donc de la lentille optique.

Il est donc souhaitable que la composition polymérisable comprenne un nombre réduit de monomères précurseurs. Cela limite en outre les problèmes de stockage et de logistique.

Des compositions polymérisables pour l'obtention de polymères à haut indice de réfraction sont déjà connues dans l'état de l'art.

La demande de brevet EP 394 495 décrit des compositions polymérisables à base de 4,4'-bis(méthacryloylthio)diphényl sulfure (désigné par BMTPS) et d'un autre monomère vinylique copolymérisable avec le BMTPS et un polythiol représenté par la formule générale $R(SH)_n$ dans laquelle R est un groupement organique polyvalent et n représente un entier égal à 2 ou plus.

Ainsi, l'exemple 27 de ce document décrit une composition polymérisable à trois constituants comprenant, en parties en poids, 5 parties de BMTPS, 4 parties d'un diacrylate de diéthoxybisphénol A et 1 partie d'un polythiol aromatique de formule :

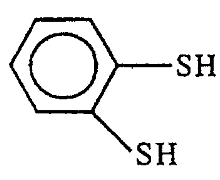

Les documents JP 61-23855, JP 61-23856, et JP 61-23858 décrivent l'obtention de verres de lunette à partir de compositions comprenant 4 à 6 constituants monomères dont en particulier du BMTPS.

Par ailleurs, ces compositions renferment des dérivés vinyliques aromatiques qui ne sont pas adaptés à une photopolymérisation.

La demande de brevet EP 609 454 concerne un procédé pour l'obtention de polymères soufrés à haut indice de réfraction, présentant une coloration réduite, un pouvoir de transmission élevé, une résistance au jaunissement

(lors du vieillissement du verre) et une faible densité.

Les compositions polymérisables décrites dans ce document renferment de 0,1 à 7% en poids d'au moins un composé choisi parmi les agents de transfert de chaîne et les composés de piégeage des radicaux libres.

Parmi ces composés, sont cités des mercapto mono- ou polyfonctionnels. Il est précisé dans cette demande qu'au delà de 7% en poids, les propriétés mécaniques du polymère se détériorent ou le composé en excès s'échappe du polymère.

La demande de brevet FR 95 006443 au nom de la Société ESSILOR, décrit des compositions polymérisables pour la fabrication de polymères haut indice comprenant le bis-(-2-méthacryloyl thioéthyl)sulfure (désigné par BMTES) ou un mélange BMTES/BMTPS, avec un dérivé du type polyméthacrylate de polyéthoxy bisphénol A et un monomère mono(méth)acrylate aromatique ou cyclanique.

En pratique, les compositions polymérisables divulguées dans cette demande de brevet renferment au moins 4 à 6 constituants monomériques polymérisables.

Par ailleurs, bien que les compositions polymérisables décrites dans cette demande soient satisfaisantes, elles peuvent encore faire l'objet d'améliorations, en particulier sur le plan de l'indice de jaune et de la tenue au vieillissement.

L'invention a donc pour objet de fournir des compositions polymérisables simples, à trois constituants monomériques de base, et possédant des propriétés améliorées au regard de l'art antérieur.

Selon l'invention, la composition polymérisable comprend comme constituants monomères copolymérisables de base au moins 85 % en poids par rapport au poids total des monomères copolymérisables présents dans la composition :

- d'un mélange M consistant, pour 100 parties en poids du mélange, en :

  (A) 20 à 80 parties d'un ou plusieurs composés (I), de préférence un seul, non aromatiques comportant deux fonctions thio(méth)acrylate

  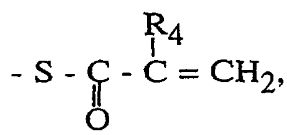

  où $R_4$ = H ou $CH_3$, et

  (B) 80 à 20 parties d'un composé (II), ou d'un mélange de ces composés, de formule:

  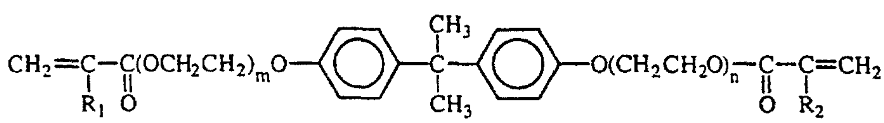

  dans laquelle $R_1$ et $R_2$ représentent, indépendamment l'un de l'autre, H ou $CH_3$ et m+n a une valeur moyenne de 0 à 20 inclus; et

  - 3 à 30% en poids par rapport au poids du mélange M d'un polythiol, de préférence 5 à 20 % ;

  la composition contenant moins de 5 % en poids d'autres monomères copolymérisables thio(méth)acrylate aromatiques, mono(méth)acrylate aromatiques ou cyclaniques et vinyliques aromatiques.

De préférence, les compositions selon l'invention comprennent 90 %, de préférence encore 95 %, mieux 98 % et autant que possible 100 % en poids des constituants monomères copolymérisables de base.

De préférence encore, les compositions selon l'invention ne comprennent pas de monomères di- et/ou polyvinyliques. Dans la présente demande, on entend par monomères di- et polyvinyliques des monomères dans lesquels deux ou plus groupes $CH_2$=CH- sont liés directement à des fragments hydrocarbonés des monomères tels que par exemple les hydrocarbures di- et polyvinyliques, le divinylbenzène et le divinylnaphtalène.

De préférence, les compositions polymérisables selon l'invention sont des compositions photopolymérisables.

Les composés (I) non aromatiques comportant deux fonctions thiométhacrylate du mélange M des compositions polymérisables selon l'invention, sont des composés connus dans la technique.

De préférence, le composé (I) répond à la formule :

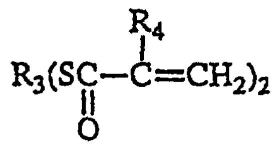

dans laquelle $R_3$ représente un radical divalent hydrocarboné aliphatique, linéaire ou ramifié, pouvant éventuellement comporter dans sa chaîne un ou plusieurs groupes choisis parmi les groupes divalents -O-, -S-,

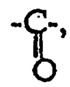

de préférence -O-, -S-, et mieux le groupe divalent -S-, et $R_4$ représente H ou $CH_3$.

Parmi les monomères de formule (I) recommandés dans la présente invention, on peut citer :

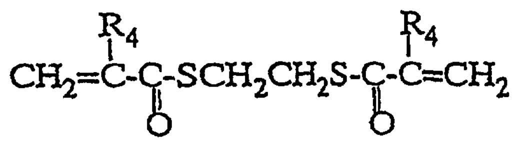

1,2-bis[(méth)acryloylthio]éthane,

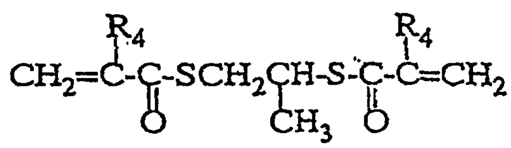

1,2-bis[(méth)acryloylthio]propane,

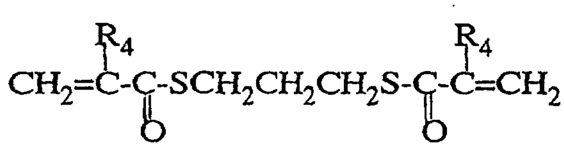

1,3-bis[(méth)acryloylthio]propane,

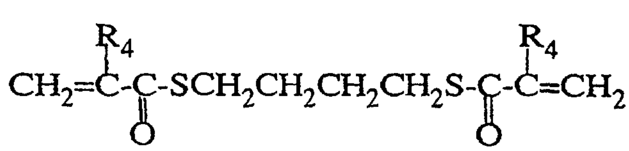

1,4-bis[(méth)acryloylthio]butane,

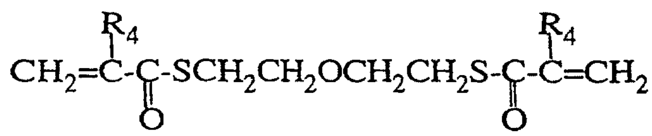

bis-2-[(méth)acryloylthioéthyl]éther,

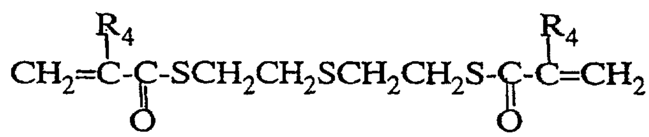

bis-2-[(méth)acryloylthioéthyl]sulfure (BMTES),

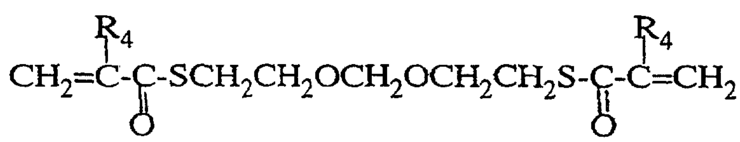

bis-2-[(méth)acryloylthioéthoxy]méthane,

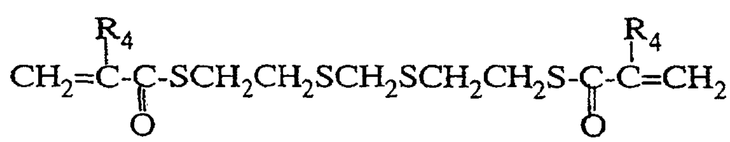

bis-2-[(méth)acryloylthioéthylthio]méthane,

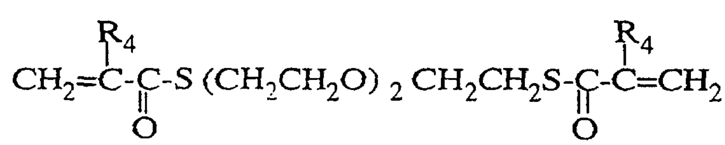

1,2-bis-[2-(méth)acryloylthioéthoxy]éthane,

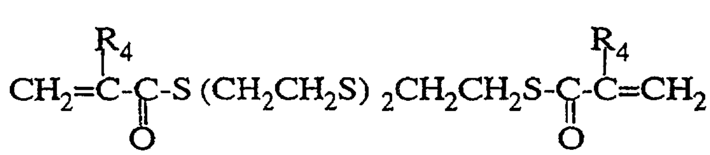

1,2-bis-[2-(méth)acryloylthioéthylthio]éthane,

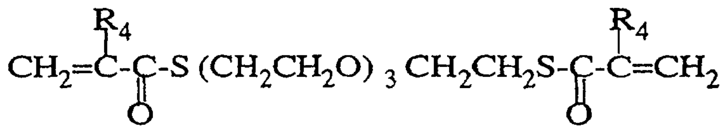

bis-[2-(2-(méth)acryloylthioéthoxy)éthyl]éther,

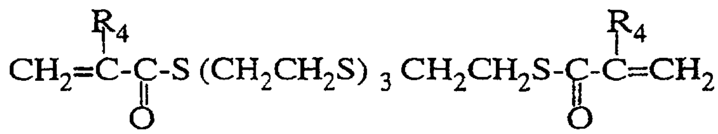

bis-[2-(2-(méth)acryloylthioéthylthio)éthyl]sulfure,

dans lesquelles $R_4$ est défini comme ci-dessus.

Le composé (I) particulièrement recommandé est le BMTES.

Le second constituant monomère du mélange M est un composé de formule (II) :

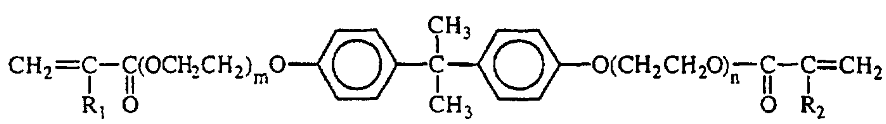

dans laquelle $R_1$ et $R_2$ représentent, indépendamment l'un de l'autre, H ou $CH_3$ et m+n a une valeur moyenne de 0 à 20 inclus.

De préférence, le composé (II) est un mélange de fractions ayant une valeur moyenne de m+n supérieure ou égale à 4.

Ces composés (II) sont bien connus dans la technique et peuvent être obtenus commercialement.

Le troisième constituant monomérique polymérisable des compositions selon la présente invention est un polythiol de formule $R_5(SH)_n$, dans laquelle n est un entier de 2 ou plus, de préférence 2 à 5, et $R_5$ est un radical aliphatique ou aromatique.

De préférence, le composé polythiol des compositions de l'invention est un composé dithiol ou trithiol, ou encore un polythiol à nombre d'Abbe élevé.

Ces composés polythiols sont bien connus dans la technique et sont décrits entre autre dans le document EP 394 495.

Parmi les dithiols utiles dans la présente invention, on peut citer le 9,10-anthracènediméthanethiol, le 1,11-undécanedithiol, le 4-éthyl-benzène-l,3-dithiol, le 1,2-éthanedithiol, le 1,8-octanedithiol, le 1,18-octadécanedithiol, le 2,5-dichlorobenzène-1,3-dithiol, le 1,3-(4-chlorophényl)propane-2,2-dithiol, le 1,1-cyclohexanedithiol, le 1,2-cyclohexanedithiol, le 1,4-cyclohexanedithiol, le 1,1-cycloheptanedithiol, le 1,1-cyclopentanedithiol, le 4,8-dithioundécane-1,11-dithiol, le dithiopentaérythritol, le dithiothréitol, le 1,3-diphénylpropane-2,2-dithiol, le 1,3-dihydroxy-2-propyl-2',3'-dimercaptopropyléther, le 2,3-dihydroxypropyl-2',3'-dimercaptopropyléther, le 2,6-diméthyloctane-2,6-dithiol, le 2,6-diméthyloctane-3,7-dithiol, le 2,4-diméthylbenzène-1,3-dithiol, le 4,5-diméthylbenzène-1,3-dithiol, le 3,3-diméthylbutane-2,2-dithiol, le 2,2-diméthylpropane-1,3-dithiol, le 1,3-di(4-méthoxyphényl)propane-2,2-dithiol, le 3,4-diméthoxybutane-1,2-dithiol, l'acide 10,11-dimercaptoundécanoïque, l'acide 6,8-dimercaptooctanoïque, le 2,5-dimercapto-1,3,4-thiadiazole, le 2,2'-dimercaptobiphényle, le 4,4'-dimercaptobiphényle, le 4,4'-dimercaptobibenzyle, le 3,4-dimercaptobutanol, le 3,4-dimercaptobutylacétate, le 2,3-dimercapto-1-propanol, le 1,2-dimercapto-1,3-butanediol, l'acide 2,3-dimercaptopropionique, le 1,2-dimercaptopropylméthyléther, le 2,3-dimercaptopropyl-2',3'-diméthoxypropyléther, le 3,4-thiophènedithiol, le 1,10-décanedithiol, le 1,12-dodécanedithiol, le 3,5,5-triméthylhexane-1,1-dithiol, le 2,5-toluènedithiol, le 3,4-toluènedithiol, le 1,4-naphtalènedithiol, le 1,5-naphtalènedithiol, le 2,6-naphtalènedithiol, le 1,9-nonanedithiol, le norbomène-2,3-dithiol, le bis(2-mercaptoisopropyl)éther, le bis(11-mercaptoundécyl)sulfure, le bis (2-mercaptoéthyl)éther, le bis(2-mercaptoéthyl)sulfure, le bis( 18-mercaptooctadécyl)sulfure, le bis(8-mercaptooctyl) sulfure, le bis(12-mercaptodécyl)sulfure, le bis(9-mercaptononyl)sulfure, le bis(4-mercaptobutyl)sulfure, le bis(3-mercaptopropyl)éther, le bis(3-mercaptopropyl) sulfure, le bis(6-mercaptohexyl)sulfure, le bis(7-mercaptoheptyl) sulfure,

le bis(5-mercaptopentyl)sulfure, l'acide 2,2'-bis(mercaptométhyl)acétique, le 1,1-bis(mercaptométhyl)cyclohexane, le bis (mercaptométhyl)durène, le phénylméthane-1,1-dithiol, le 1,2-butanedithiol, le 1,4-butanedithiol, le 2,3-butanedithiol, le 2,2-butanedithiol, le 1,2-propanedithiol, le 1,3-propanedithiol, le 2,2-propanedithiol, le 1,2-hexanedithiol, le 1,6-hexanedithiol, le 2,5-hexanedithiol, le 1,7-heptanedithiol, le 2,6-heptanedithiol, le 1,5-pentanedithiol, le 2,4-pentanedithiol, le 3,3-pentanedithiol, le 7,8-heptadécanedithiol, le 1,2-benzènedithiol, le 1,3-benzènedithiol, le 1,4-benzènedithiol, le 2-méthylcyclohexane-1,1-dithiol, le 2-méthylbutane-2,3-dithiol, l'éthylène glycol dithioglycolate, l'éthylène glycol bis(3-mercaptopropionate). Parmi les trithiols, on peut citer le 1,2,3-propanetrithiol, le 1,2,4-butanetrithiol, le triméthylolpropanetrithiol glycolate, le triméthylolpropane tris(3-mercaptopropionate), le pentaérythritol trithioglycolate, le pentaérythritol tris(3-mercaptopropionate), le 1,3,5-benzènetrithiol, et le 2,4,6-mésitylènetrithiol.

On peut encore citer parmi les polythiols utiles dans les compositions de la présente invention, le néopentane tétrathiol, le 2,2'-bis(mercaptométhyl)-1,3-propanedithiol, le pentaérythritol tétrakis(3-mercaptopropionate), le 1,3,5-benzènetrithiol, le 2,4,6-toluènetrithiol, le 2,4,6-méthylènetrithiol, et les polythiols correspondant aux formules :

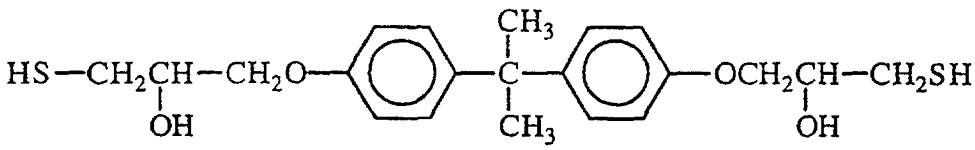

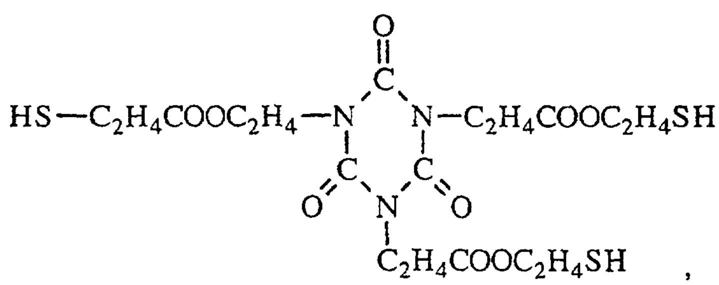

,

$(HS\ CH_2CH_2\ COO\ CH_2)_3\ C\ C_2H_5$ (TMTP),

et

le 4-mercaptométhyl-3,6-dithia-1,8-octanedithiol.

Les polythiols préférés selon la présente invention sont l'éthylèneglycol bis(thioglycolate), le triméthylolpropane tris(3-mercaptopropionate), et le pentaérythritol tétrakis thiopropionate.

Comme indiqué précédemment, la composition polymérisable selon l'invention comprend 3 à 30% en poids de polythiol par rapport au poids total du mélange M. De préférence, le polythiol est utilisé à une concentration de 5 à 20 %, mieux supérieure à 7% en poids, et mieux encore généralement comprise entre 10 et 15% en poids.

Les compositions polymérisables selon l'invention peuvent également comporter des additifs classiquement utilisés dans les compositions polymérisables pour le moulage d'articles optiques, en particulier des verres de lunette, dans des proportions classiques, à savoir des inhibiteurs, des colorants, des absorbeurs UV, des parfums, des déodorants, des antioxydants et des additifs anti-jaunissement.

Comme exemples préférentiels d'agents antioxydants, on peut citer le triphénylphosphine (TPP) et l'Irganox® 1010 (pentaérythritoltetrakis[3(3,5-di-tert. butyl-4-hydroxyphényl)propionate] (CG1010).

Les parfums permettent de masquer l'odeur des compositions, en particulier lors des opérations de surfaçage.

Les compositions selon l'invention comprennent généralement des amorceurs de polymérisation, de préférence des photoamorceurs ou des mélanges de photoamorceurs et d'amorceurs thermiques, en proportion de 0,001 à 5% en poids par rapport au poids total des monomères polymérisables contenus dans la composition.

Parmi les photoamorceurs utilisables dans les compositions polymérisables selon l'invention, on peut citer en particulier, l'oxyde de 2,4,6-triméthylbenzoyldiphénylphosphine, la 1-hydroxycyclohexyl phénylcétone, la 2,2-diméthoxy-1,2-diphényléthane 1-one, les alkylbenzoyléthers, le photoamorceur commercialisé par la Société CIBA-GEIGY sous la dénomination CGI 1700, qui est un mélange 25/75 d'un composé de formule :

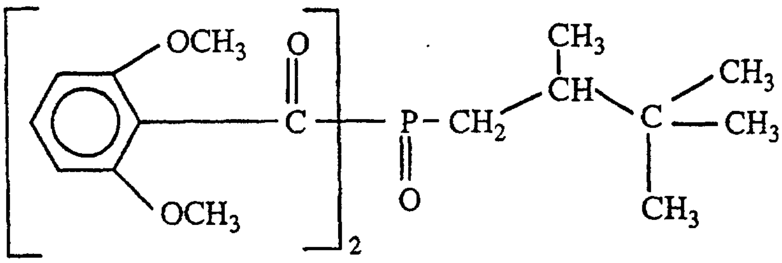

(A)

et d'un composé de formule :

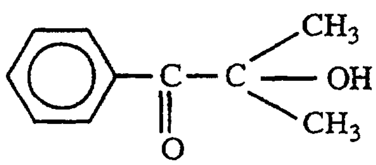

(B)

et le photoamorceur CGI1850 commercialisé par la société CIBA GEIGY qui est un mélange (50/50) (en poids) de composé A et d'Irgacure® 184 de formule :

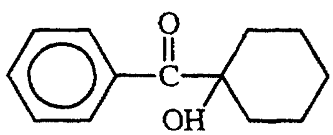

Comme indiqué précédemment, les compositions polymérisables préférées selon l'invention sont des compositions photopolymérisables comportant un ou plusieurs photoamorceurs.

De préférence encore, les compositions polymérisables selon l'invention sont des compositions photo- et thermopolymérisables comprenant à la fois un photoamorceur de polymérisation et un amorceur thermique de polymérisation.

On a en particulier constaté que lorsque la concentration en polythiol dans la composition polymérisable selon l'invention est de l'ordre d'environ 10% en poids par rapport au poids total du mélange M ou plus, il est préférable de procéder à une photopolymérisation initiale pendant une durée variant de préférence de 1 à 5 minutes, puis de soumettre la composition à une polymérisation thermique à une température comprise généralement entre 60 et 130°C pendant une durée d'environ 1 à 2 heures.

Les amorceurs de polymérisation thermique sont des composés bien connus dans la technique et on peut citer parmi ceux-ci les péroxydes tels que le péroxyde de benzoyle, le péroxydicarbonate de cyclohexyle, le péroxydicarbonate d'isopropyle.

Dans les exemples suivants illustrant la présente invention, toutes les parties et pourcentages, sauf indication contraire, sont exprimés en poids.

Dans ces exemples, on a utilisé les abréviations suivantes :

BMTES : bis[2-méthacryloylthio)éthyl]sulfure ;
80 N : monomère BPE-80Ncommercialisé par la société SHIN NAKAMURA de formule :

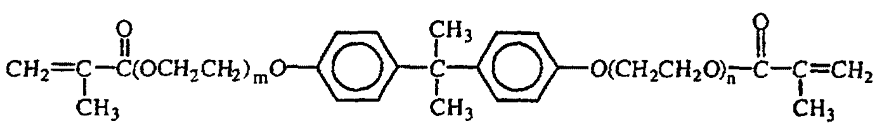

(II)

dans laquelle la valeur moyenne de m+n = 2,6 ;

200 N : monomère BPE-200N de SHIN NAKAMURA de formule (II) dans laquelle m+n a pour valeur moyenne 4,2 ;

D 121 : monomère de formule (II) dans laquelle m+n a pour valeur moyenne 4,8, fourni par la société AKZO;

EGTG : éthylèneglycol bis-(thioglycolate);

TMTP : triméthylolpropane tris-3-mercaptopropionate;

PETP : pentaérythritol tétrakis thiopropionate;

TPP : triphénylphosphine

UV 5411: 2-(2-hydroxy-5-t-octylphényl)benzotriazole (absorbeur UV);

CGI1700 : photoamorceur de la Société CIBA-GEIGY, comprenant les deux composés :

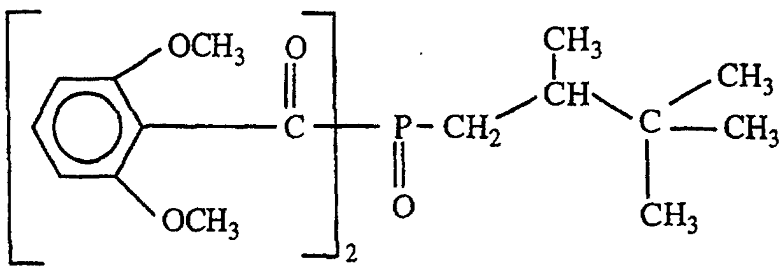

(A)

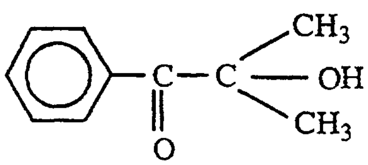

(B)

avec un ratio B/A = 75/25.

Les indices de jaune des polymères obtenus par moulage et polymérisation des compositions des exemples, ont été déterminés par voie spectroscopique. Pour cette voie spectroscopique, on utilise une méthode standardisée (ASTM D-1925-63) dans laquelle l'indice de jaune est défini par :

$$Yi = \frac{(127,5\ X-105,8\ Z)}{Y},$$

où X, Y, Z sont les coordonnées trichromatiques de l'échantillon, mesuré par spectrophotomètre UV visible sur l'ensemble du spectre entre 380 et 780 nm. La valeur Yi est donnée avant et après recuit des polymères.

Plus la valeur de Yi est élevée, plus l'indice de jaune est élevé.

## Exemples 1 à 7

On a préparé les mélanges polymérisables 1 à 7 dont la composition est indiquée dans le tableau I ci-après.

Chacun des mélanges est versé dans un moule en verre minéral pour lentilles ophtalmiques, puis les moules ainsi remplis sont exposés à une irradiation UV pendant 2 à 3 minutes. Après démoulage, les polymères obtenus sont soumis à un recuit à 120°C pendant 2 heures.

Les mesures d'indice de jaune (Yi) sont faites sur une lentille ophtalmique de 16 mm d'épaisseur au centre avant et après le recuit.

Les résultats des mesures d'indice de jaune ainsi que les indices de réfraction, nombre d'Abbe, coloration (pourcent de transmission) et densité des polymères sont donnés dans le tableau I ci-après.

**TABLEAU I**

| EXEMPLES | 1 | 2 | 3 | 4 | 5 | 6 | 7 |
|---|---|---|---|---|---|---|---|
| Monomères polymérisables | Parties en poids | | | | | | |
| Mélange M | | | | | | | |
| BMTES | 40 | 40 | 40 | 40 | 45 | 50 | 50 |
| D 121 | - | - | - | 60 | - | - | - |
| 80 N | - | - | 25 | - | - | - | - |
| 200 N | 60 | 60 | 30 | - | 55 | 35 | 35 |
| Polythiol | | | | | | | |
| EGTG | 7,5 | 10 | 5 | 7,5 | 6 | - | - |
| TMTP | - | - | - | - | - | 15 | - |
| PETP | - | - | - | - | - | - | 15 |
| Adjuvants | Pourcent en poids par rapport aux monomères polymérisables | | | | | | |
| CGI 1700 (photoamorceur) | 0,10 | 0,10 | 0,10 | 0,10 | 0,10 | 0,10 | 0,10 |
| TPP (agent de blanchiment) | 0,10 | 0,10 | 0,10 | 0,10 | 0,10 | 0,10 | 0,10 |
| UV 5411 (absorbeur UV) | 0,05 | 0,05 | 0,05 | 0,05 | 0,05 | 0,05 | 0,05 |
| Transmission (%) (à 550 nm) | 90,32 | 90,1 | 90,24 | 90,67 | 90 | 90 | 90 |
| Diffusion | NON | NON | NON | NON | NON | NON | NON |
| Yi (lentille épaisseur 16 mm) | | | | | | | |
| avant recuit | 1,73 | 1,41 | 2,24 | 2,61 | - | - | - |
| après recuit | 1,66 | 1,51 | 2,31 | 2,51 | 2,4 | 2,7 | 2,8 |
| Résistance chimique | - | - | - | - | OUI | OUI | OUI |
| Indice | - | - | - | - | 1,585 | 1,589 | 1,588 |
| Nombre d'Abbe | - | - | - | - | 38 | 36 | 36 |
| Coloration (% de transmission) | - | - | - | - | 36 | 35 | 38 |
| Densité | - | - | - | - | 1,26 | 1,27 | 1,28 |

**Exemple 8 et exemple comparatif CE 1**

On prépare en procédant de la même façon que précédemment les mélanges indiqués dans le tableau II ci-après. Toutefois, pour la mise en oeuvre de l'exemple comparatif CE 1, il est nécessaire de chauffer à environ 45°C le mélange de monomères pour assurer une bonne homogénéisation du mélange avant introduction dans les moules.

Les résultats d'indice de jaune avant et après recuit, de diffusion visible et de trouble sont donnés dans le tableau II ci-dessous.

Les lentilles présentent une épaisseur au centre de 16 mm.

TABLEAU II

| | Exemple 8 | CE 1 |
|---|---|---|
| **Monomères polymérisables** | **Parties en poids** | |
| BMTES | 40 | |
| BMTPS | | 40 |
| 200 N | 50 | 50 |
| EGTG | 10 | 10 |
| Adjuvants | % en poids par rapport au poids total de monomères | |
| UV 5411 | 0,05 | 0,05 |
| Irganox®1010 (agent anti-oxydant) | 0,10 | 0,10 |
| TPO (photoamorceur) | 0,07 | 0,07 |
| Irgacure® 184 (photoamorceur) | 0,03 | 0,03 |
| Transmission | 91,7 | 90 |
| Yi avant recuit | 4,7 | 11,72 |
| Yi après recuit | 4,4 | 11 |
| Diffusion visible | NON | OUI |
| Trouble | 1,7 | 3,2 |
| TPO = 2,4,6-triméthyl benzoyl diphényl phosphine. | | |

**Exemple comparatif CE 2**

On reproduit une composition selon l'enseignement de l'exemple 11 de la demande de brevet français d'ESSILOR n° 95 06443 publiée sous le n° FR 2 734 828.

| **Composition :** | |
|---|---|
| Monomères polymérisables | Parties en poids |
| BMTES | 21 |
| BMTPS | 10 |
| EBADMA | 24 |
| OBADMA | 28 |
| TBrBA | 11 |
| TMTP | 6 |
| Adjuvants | % en poids par rapport au poids total de monomères |
| UV 5411 | 0,05 |
| Irganox® 1010 | 0,10 |
| TPO | 0,07 |
| IRGACURE® 184 | 0,035 |

EBADMA : monomère de formule (II) avec $R_1 = CH_3$, $R_2 = CH_3$, m+n = 2,6

OBADMA: monomère de formule (II) avec $R_1 = CH_3$, $R_2 = CH_3$, m + n = 10

TBrBa : tribromobenzylacrylate

IRGACURE® 184 : 1-hydroxycyclohexyl phénylcétone

TPO: 2,4,6-triméthyl benzoyl diphényl phosphine

Après photopolymérisation dans des moules et recuit comme pour les exemples 1 à 7, on obtient une lentille

ophtalmique de 16 mm d'épaisseur centre.

Les valeurs de Yi mesurées sont :

- avant recuit : 5,83
- après recuit : 6,08.

On effectue sur les lentilles obtenues un essai de vieillissement rapide par insolation. Cet essai d'insolation consistait à soumettre les lentilles pendant 100 et 200 heures à une insolation dans les mêmes conditions avec un appareil SUNTEST HANAU émettant un rayonnement d'une puissance de 24,4 $W/m^2$ dans le domaine spectral de 300-400 nm.

On mesurait après 100 heures et 200 heures d'insolation l'indice de jaune des polymères. Après 100 heures d'exposition à l'essai d'insolation, l'indice de jaune Yi = 6,57 et après 200 heures Yi = 19,56.

**Exemple 9**

En comparaison, une lentille selon l'invention préparée dans les mêmes conditions que l'exemple comparatif CE 2 avec le mélange polymérisable suivant :

| Monomères polymérisables | Parties en poids |
|---|---|
| BMTES | 50 |
| DBADMA | 50 |
| TMTP | 6,4 |
| Adjuvants | % en poids par rapport au poids total de monomères |
| UV 5411 | 0,05 |
| CG 1010 | 0,10 |
| TPO | 0,07 |
| Irgacure® 184 | 0,035 |

présente après 200 heures d'insolation, un indice de jaune Yi de 4,67. DBADMA, composé de formule II avec $R_1$ et $R_2 = CH_3$ et m+n = 4.

**Exemples 10 et 11**

On prépare les compositions suivantes du tableau III et on les coule dans des moules.

Les conditions de polymérisation sont indiquées ci-après.

TABLEAU III

| | **Exemple 10** | **Exemple 11** |
|---|---|---|
| Monomères polymérisables | Parties en poids | |
| BMTES | 50 | 54 |
| D 121 | 35 | 40 |
| PETG | 15 | |
| TMTP | | 6 |
| Adjuvants | % en poids par rapport au poids total de monomères | |
| UV 5411 | 0,10 | 0,10 |
| CG 1010 | 0,10 | 0,10 |
| TPO | 0,07 | 0,07 |
| CGI 184 | 0,03 | 0,03 |
| t-butylperoxy(2-éthyl hexanoate) ( amorceur thermique) | 0,10 | 0,10 0,10 |

TABLEAU III (suite)

| | Exemple 10 | Exemple 11 |
|---|---|---|
| Polymérisation | UV 2 minutes puis 1-2 heures de chauffage de 60 - 120°C | UV 3 minutes |
| Propriétés ne/nd | 1,599 / 1,594 | 1,598 / 1,593 |
| Nombre d'Abbe ve/vd | 39/38,7 | 37,7 137,4 |
| Yi (1,3 mm) | 1,5 | 1,48 |
| densité | 1,285 | 1,27 |
| PETG : pentaérythritol tétrakis (thioglycolate) | | |

Les lentilles présentent une épaisseur au centre de 16 mm.

L'essai de résistance chimique a été effectué en immergeant les lentilles dans de l'éthanol à 95 % pendant 120 minutes ; dans l'acétone pendant 3, 15 et 30 minutes ; dans l'acide acétique à 3 % pendant 30 minutes ; dans la soude à 10 % à 50°C pendant 5 et 15 minutes ; dans l'eau salée (45 g/l) pendant 8, 24 et 48 heures. Le lentilles sont ensuite testées visuellement sous une lampe fluorescente.

L'essai est positif (Résistance chimique : oui) si les lentilles ne présentent aucun défaut visuel. L'essai est négatif dans le cas contraire.

La mesure du trouble a été effectuée au moyen d'un appareil Hazeguard ®. La valeur du trouble est lue directement sur l'appareil. Plus la valeur lue est basse, plus la diffusion est faible.

La mesure visuelle de la diffusion a été effectuée en plaçant la lentille sous une lampe fluorescente et en observant visuellement s'il existe des microdomaines de diffusion dans la lentille. L'absence de microdomaines de diffusion visibles à l'oeil nu est identifiée par un "NON". L'existence de tels microdomaines est identifiée par un "OUI".

**Revendications**

1. Composition polymérisable, **caractérisée en ce qu'**elle comprend comme constituants monomères copolymérisables de base, au moins 85 % en poids par rapport au poids total des monomères copolymérisables présents dans la composition :

   - d'un mélange M consistant, pour 100 parties en poids du mélange, en :

     (A) 20 à 80 parties d'un ou plusieurs, de préférence un seul, composés (I) non aromatiques comportant deux fonctions thio(méth)acrylate

     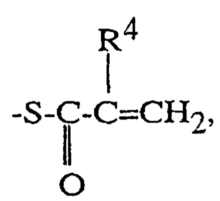

     où $R_4$ = H ou $CH_3$, et et

     (B) 80 à 20 parties d'un composé (II), de formule:

     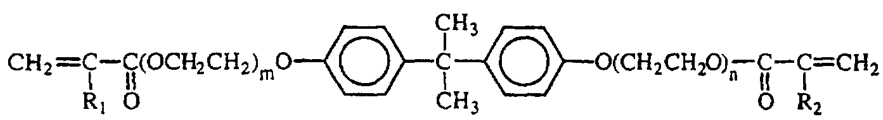

   dans laquelle $R_1$ et $R_2$ représentent, indépendamment l'un de l'autre, H ou $CH_3$ et m+n a une valeur moyenne de 0 à 20 inclus; et

- 3 à 30% en poids par rapport au poids du mélange M d'un polythiol ;

  la composition contenant moins de 5 % en poids par rapport au poids total des monomères copolymérisables présents dans la composition, d'autres monomères thio(méth)acrylate aromatiques, mono(méth) acrylate aromatiques ou cyclaniques et vinyliques aromatiques.

**2.** Composition selon la revendication 1, **caractérisée en ce que** les constituants monomères de base représentent 90 %, de préférence 95 %, mieux 98 % et mieux encore 100 % des monomères copolymérisables présents dans la composition.

**3.** Composition selon la revendication 1 ou 2, **caractérisée en ce que** le composé (I) a pour formule :

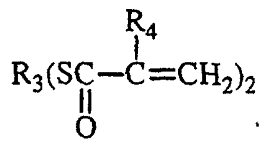

dans laquelle $R_3$ représente un radical divalent hydrocarboné aliphatique, linéaire ou ramifié, pouvant éventuellement comporter dans sa chaîne un ou plusieurs groupes divalents choisis parmi : -O-, -S-

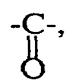

de préférence -O- et -S-, et mieux un groupe divalent -S-, et $R_4$ représente un atome d'hydrogène ou un groupe $CH_3$.

**4.** Composition selon l'une quelconque des revendications 1 à 3, **caractérisée en ce que** le composé (I) est le bis-2-[(méth)acryloylthioéthyl]sulfure.

**5.** Composition selon l'une quelconque des revendications précédentes, **caractérisée en ce que** le composé (II) est un mélange de fractions ayant une valeur moyenne de m+n supérieure ou égale à 4.

**6.** Composition selon l'une quelconque des revendications précédentes, **caractérisée en ce que** le polythiol est un dithiol, un trithiol ou un polythiol à nombre d'Abbe élevé.

**7.** Composition polymérisable selon l'une quelconque des revendications précédentes, **caractérisée en ce que** le polythiol est présent à une concentration allant de 5 à 20 %, de préférence supérieure à 7% en poids par rapport au poids total du mélange M.

**8.** Composition polymérisable selon la revendication 7, **caractérisée en ce que** le polythiol est présent à une concentration comprise entre 10 et 15% en poids par rapport au poids total du mélange M.

**9.** Composition polymérisable selon l'une quelconque des revendications précédentes, **caractérisée en ce que** la composition est une composition photopolymérisable.

**10.** Polymère obtenu par polymérisation d'une composition selon l'une quelconque des revendications 1 à 9.

**11.** Lentille optique, **caractérisée en ce qu'**elle est constituée d'un polymère selon la revendication 10.

**12.** Lentille optique selon la revendication 11, **caractérisée en ce que** cette lentille est un verre de lunette.

## Patentansprüche

**1.** Polymerisierbare Zusammensetzung, **dadurch gekennzeichnet, dass** sie als copolymerisierbare Grundmonomerbestandteile folgendes umfasst: wenigstens 85 Gew.-%, bezogen auf das Gesamtgewicht der in der Zusammensetzung vorhandenen copolymerisierbaren Monomere,

- eines Gemischs M, das, auf 100 Gewichtsteile des Gemischs, aus folgendem besteht:

  (A) 20 bis 80 Teile einer oder mehrerer, vorzugsweise einer einzigen, nichtaromatischen Verbindung (I), die zwei Thio(meth)acrylat-Funktionen

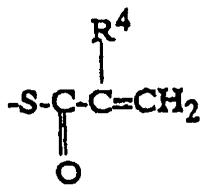

  umfasst, wobei $R^4$ = H oder $CH_3$; und

  (B) 80 bis 20 Teile einer Verbindung (II) der Formel

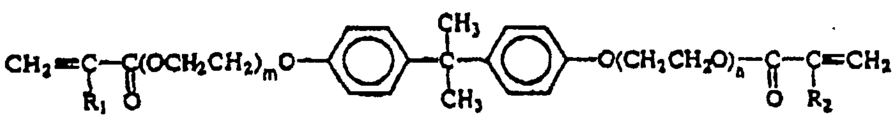

  wobei $R_1$ und $R_2$ unabhängig voneinander H oder $CH_3$ bedeuten und m+n einen Mittelwert von 0 bis 20 einschließlich hat; und

- 3 bis 30 Gew.-%, bezogen auf das Gewicht des Gemischs M, eines Polythiols; wobei die Zusammensetzung weniger als 5 Gew.-%, bezogen auf das Gesamtgewicht der in der Zusammensetzung vorhandenen copolymerisierbaren Monomere, anderer aromatischer Thio(meth)acrylat-, aromatischer oder alicyclischer und vinylaromatischer Mono(meth)acrylat-Monomere enthält.

2. Zusammensetzung gemäß Anspruch 1, **dadurch gekennzeichnet, dass** die Grundmonomerbestandteile 90%, vorzugsweise 95%, besonders bevorzugt 98% und ganz besonders bevorzugt 100% der in der Zusammensetzung vorhandenen copolymerisierbaren Monomere ausmachen.

3. Zusammensetzung gemäß Anspruch 1 oder 2, **dadurch gekennzeichnet, dass** die Verbindung (I) die Formel

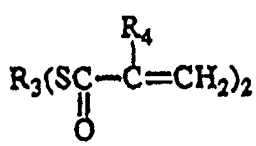

hat, wobei $R_3$ einen zweiwertigen aliphatischen, linearen oder verzweigten Kohlenwasserstoffrest bedeutet, der gegebenenfalls in der Kette eine oder mehrere zweiwertige Gruppen aufweisen kann, die aus -O-, -S- und

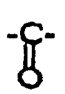,

vorzugsweise -O- und -S- und besonders bevorzugt einer zweiwertigen Gruppe -S- ausgewählt sind, und $R_4$ ein Wasserstoffatom oder eine $CH_3$-Gruppe bedeutet.

4. Zusammensetzung gemäß einem der Ansprüche 1 bis 3, **dadurch gekennzeichnet, dass** es sich bei Verbindung (I) um Bis-2-[(meth)acryloylthioethyl]schwefel handelt.

5. Zusammensetzung gemäß einem der vorstehenden Ansprüche, **dadurch gekennzeichnet, dass** es sich bei Verbindung (II) um ein Gemisch von Fraktionen handelt, die einen Mittelwert von m+n von größer oder gleich 4 haben.

6. Zusammensetzung gemäß einem der vorstehenden Ansprüche, **dadurch gekennzeichnet, dass** das Polythiol ein Dithiol, ein Trithiol oder ein Polythiol mit hoher Abbe-Zahl ist.

7. Polymerisierbare Zusammensetzung gemäß einem der vorstehenden Ansprüche, **dadurch gekennzeichnet, dass** das Polythiol in einer Konzentration von 5 bis 20 Gew.-%, vorzugsweise über 7 Gew.-%, bezogen auf das Gesamtgewicht des Gemischs M, vorhanden ist.

8. Polymerisierbare Zusammensetzung gemäß Anspruch 7, **dadurch gekennzeichnet, dass** das Polythiol in einer Konzentration zwischen 10 und 15 Gew.-%, bezogen auf das Gesamtgewicht des Gemischs M, vorhanden ist.

9. Polymerisierbare Zusammensetzung gemäß einem der vorstehenden Ansprüche, **dadurch gekennzeichnet, dass** die Zusammensetzung eine photopolymerisierbare Zusammensetzung ist.

10. Polymer, das durch Polymerisation einer Zusammensetzung gemäß einem der Ansprüche 1 bis 9 erhalten wurde.

11. Optische Linse, **dadurch gekennzeichnet, dass** sie aus einem Polymer gemäß Anspruch 10 besteht.

12. Optische Linse gemäß Anspruch 11, **dadurch gekennzeichnet, dass** es sich bei dieser Linse um ein Brillenglas handelt.

**Claims**

1. Polymerizable composition, **characterized in that** it comprises, as basic copolymerizable monomer components, at least 85% by weight, based on the total weight of the copolymerizable monomers present in the composition :

- of a mixture M consisting, per 100 parts by weight of the mixture, of :

(A) 20 to 80 parts of one or more nonaromatic compounds (I), preferably a single nonaromatic compound (I), comprising two thio(meth)acrylate functional groups :

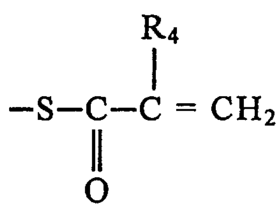

where $R_4$ = H or $CH_3$, and

(B) 80 to 20 parts of a compound (II) of formula :

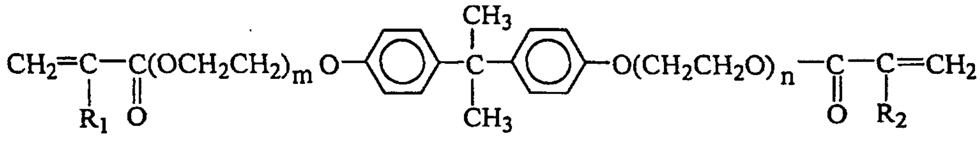

in which $R_1$ and $R_2$ represent, independently of one another, H or $CH_3$ and m+n has a mean value of 0

to 20 inclusive ; and

- 3 to 30% by weight, based on the weight of the mixture M, of a polythiol ;
  the composition comprising less than 5% by weight, based on the total weight of the copolymerizable monomers present in the composition, of other aromatic thio(meth)acrylate, aromatic or cyclanic mono(meth) acrylate and aromatic vinyl monomers.

**2.** Composition according to claim 1, **characterized in that** the basic monomer components represent 90 %, preferably 95 %, better still 98 % and event better still 100 % of the copolymerizable monomers present in the composition.

**3.** Composition according to claim 1 to 2, **characterized in that** the compound (I) has the formula :

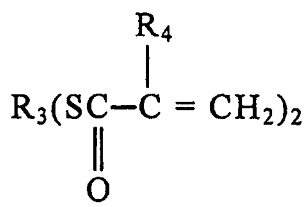

in which $R_3$ represents a linear or branched divalent aliphatic hydrocarbon radical which can optionally comprise, in its chain, one or more divalent groups selected from: -O-, -S- or

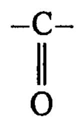 ,

preferably -O- and -S-, and better still a divalent group -S-, and $R_4$ represents a hydrogen atom or a $CH_3$ group.

**4.** Composition according to any one of claims 1 to 3, **characterized in that** the compound (I) is bis[2-(meth)acryloylthioethyl] sulphide.

**5.** Composition according to any one of the preceding claims, **characterized in that** the compound (II) is a mixture of fractions having a mean value of m+n greater than or equal to 4.

**6.** Composition according to any one of the preceding claims, **characterized in that** the polythiol is a dithiol, a trithiol or a polythiol with a high Abbe number.

**7.** Polymerizable composition according to any one of the preceding claims, **characterized in that** the polythiol is present at a concentration ranging from 5 to 20 %, preferably greater than 7 %, by weight based on the total weight of the mixture M.

**8.** Polymerizable composition according to claim 7, **characterized in that** the polythiol is present at a concentration of between 10 and 15 % by weight based on the total weight of the mixture M.

**9.** Polymerizable composition according to any one of the preceding claims, **characterized in that** the composition is a photopolymerizable composition.

**10.** Polymer obtained by polimerization of a composition according to any one of claims 1 to 9.

**11.** Optical lens, **characterized in that** it is made of a polymer according to claim 10.

**12.** Optical lens according to claim 11, **characterized in that** this lens is a spectacle glass.